# EUROPÄISCHE PATENTSCHRIFT

(11) **EP 1 424 116 B1**
(45) Veröffentlichungstag und Bekanntmachung des Hinweises auf die Patenterteilung: **23.09.2009**
(21) Anmeldenummer: 03027016.9
(22) Anmeldetag: 22.11.2003
(51) Int. Cl.: B01D 19/00

(54) **Luftblasen-Abscheider**
Deaeration apparatus
Dispositif de dégazage.

(30) Priorität: 30.11.2002 DE 10255996
(43) Veröffentlichungstag der Anmeldung: 02.06.2004
(73) Patentinhaber: AS-Antriebstechnik und Service GmbH, 48734 Reken (DE)
(72) Erfinder: Kaspari, Gerd, Dipl.-Ing., 48653 Coesfeld (DE); Hesterwerth, Heinz, Dipl.-Ing., 48734 Reken (DE)
(74) Vertreter: Habbel, Ludwig

(56) Entgegenhaltungen:
- DE-A- 3 319 639
- GB-A- 157 790
- US-A- 5 507 858

## Beschreibung

Die Erfindung betrifft einen Luftblasen-Abscheider nach dem Oberbegriff des Anspruchs 1.

Derartige Luftblasen-Abscheider sind beispielsweise aus dem Bereich von Zentralschmieranlagen bekannt, wo das Öl von beispielsweise mehreren Lagern zurückgeführt wird und in einem Sammelbehälter über einen vorgegebenen Zeitraum verbleibt, um während dieser Zeit eine ausreichende Entgasung sicherzustellen, also das Aufsteigen von Luftblasen, die vom Öl in den Sammelbehälter mitgeführt worden sind.

Für eine ausreichende Entgasung wird üblicherweise eine Verweildauer des Öl von zwanzig Minuten innerhalb des Sammelbehälters berechnet, sodass beispielsweise eine Zentralschmieranlage mit einem Schmierölbedarf von 500 Litern pro Minute einen Ölvorrat innerhalb des Sammelbehälters von 10.000 Litern erfordert. Dieses riesige Ölvolumen ist in mehrfacher Hinsicht sehr kostenintensiv, unter anderem hinsichtlich der reinen Anschaffungskosten, aber auch hinsichtlich des konstruktiven Aufwandes für den Sammelbehälter und die erforderliche Ölauffangwanne.

Der Erfindung liegt die Aufgabe zugrunde, einen gattungsgemäßen Luftblasen-Abscheider dahingehend zu verbessern, dass dieser mit möglichst geringen baulichen Abmessungen und daher unter Einsatz eines möglichst geringen Ölvolumens eine gute Abscheideleistung aufweist.

Diese Erfindung wird durch einen Luftblasen-Abscheider mit den Merkmalen des Anspruchs 1 gelöst.

Die Erfindung schlägt mit anderen Worten vor, die Luftblasen zunächst an sogenannten Rückhalteplatten zu sammeln, sodass kleinere Bläschen zu einer größeren Blase koagulieren können. Da größere Blasen einen entsprechend größeren Auftrieb innerhalb des Öls aufweisen, ist eine zuverlässige Entgasung, insbesondere durch die Erzielung möglichst großer Blasen möglich, da diese dementsprechend schnell und zuverlässig aus dem Ölstrom auszutreten bestrebt sind. Wie flach die Rückhalteplatten dabei anzuordnen sind, kann anhand der vorgesehenen Betriebsbedingungen gewählt werden: exakt horizontal ausgerichtete Rückhalteplatten können maximale Verweilzeiten der Luftblasen an der Plattenunterseite bewirken, eine leichte Schrägstellung hingegen unterstützt die Bewegung der Bläschen zur nächsten Durchtrittsöffnung.

Diesen Rückhalteplatten nachgeschaltet ist ein Strömungskanal für das Öl vorgesehen, welcher durch Querschnittsabmessungen abwechselnder Größe, das heißt, weitere und engere freie Querschnittsflächen gekennzeichnet ist. Durch die wechselnden Querschnittsabmessungen werden Abschnitte mit höheren und mit geringeren Strömungsgeschwindigkeiten bewirkt. In den Bereichen mit geringeren Strömungsgeschwindigkeiten wird die Möglichkeit für die Luftblasen vergrößert, ausreichend schnell aufzusteigen, um vom Ölstrom abgeschieden zu werden.

Vorteilhaft können die Rückhalteplatten übereinander angeordnet sein, so dass im Bereich der Rückhalteplatten der Ölstrom nach oben geführt wird. Diese Richtung des Ölstroms begünstigt das Aufsteigen der Luftblasen, sodass sich in der Praxis über dieser Kolonne von Rückhalteblechen auf dem Ölbad bereits ein Ölschaumteppich ergibt, in dem sich ein Großteil der bereits abgeschiedenen Luftblasen befindet.

Vorteilhaft können die einzelnen Rückhalteplatten jeweils nicht exakt horizontal, sondern leicht schräg angestellt sein. Vergleichsweise große Luftblasen, die bereits ausreichende Auftriebskräfte entwickeln, streichen unten an diesen schräg stehenden Blechen entlang und koagulieren dabei mit kleineren Luftblasen, die unter den Blechen hängen geblieben sind und noch keine ausreichenden Auftriebskräfte aufweisen, um von sich aus an den Rückhalteplatten entlangzuwandern und anschließend nach oben aufzusteigen.

In besonders einfacher und preisgünstiger Weise können die Rückhalteplatten aus Lochblechen bestehen.

Um den Rückhalt der aufsteigenden Luftblasen zu begünstigen und ein "Durchschießen" der Luftblasen nach oben zu verhindern, sind die Löcher in den übereinander angeordneten Rückhalteplatten vorzugsweise versetzt zueinander angeordnet.

Gegebenenfalls kann der Lochanteil verschiedener Platten unterschiedlich sein: so können z.B. die uneren Platten kleinere Löcher bei vorgegebenem Lochabstand aufweisen, um einen größeren geschlossenen Anteil der Plattenfläche zu bewirken und damit einen stärkeren Rückhalte-Effekt, so dass möglichst schnell möglichst große Blasen erzielt werden. Darüber können z.B. die Platten größere Löcher bei demselben vorgegebenem Lochabstand aufweisen, um den Durchtritt größerer Blasen zu ermöglichen, da die Blasen nicht nur durch Koagulation, sondern auch aufgrund des nach oben abnehmenden hydrostatischen Drucks beim Aufsteigen größer werden.

Zur Verbesserung der Abscheideleistung und zu einer verbesserten Rückhaltefähigkeit für kleinste Luftbläschen kann vorgesehen sein, dass die Rückhalteplatten eine entsprechende Oberflächengestaltung aufweisen. So können diese - je nach Praxiserfordernissen und eingesetzter Ölsorte sowie nach den herrschenden Betriebstemperaturen - beispielsweise mit Oberflächenbeschichtungen versehen sein oder sie können auf rein physikalische Weise oberflächenbehandelt sein, beispielsweise eloxiert oder mattiert, um durch eine entsprechende feine Rauhigkeit das Anhaften kleinster Luftbläschen zu begünstigen, so dass diese eine längere Verweilzeit an der Plattenunterseite aufweisen, zugunsten einer verbesserten Möglichkeit zu Koagulation.

Falls eine Oberflächenrauhigkeit vorteilhaft sein sollte, so kann die "Platte" ggf. auch statt aus einem geschlossenen Werkstoff aus einem porösen Werkstoff bestehen oder an ihrer Unterseite damit versehen sein. Ein Filterwerkstoff wie ein sehr engmaschiges Sieb, Gewebe, Vlies o. dergl. kann dafür in Frage kommen. Die Porosität bewirkt dabei lediglich die gewünschte Oberflächenrauhigkeit, während die Durchtrittsmöglichkeit für die Luftblasen durch zusätzliche, eigens vorgesehene Öffnungen ermöglicht wird.

Vorteilhaft kann der Kanalquerschnitt durch sägezahnartig verlaufende Führungsbleche begrenzt sein. Ein derartig sägezahnartig gebogenes Blech kann unterhalb der Öloberfläche angeordnet sein, um auf preisgünstige und effektive Weise die unterschiedlichen freien Querschnitte des Strömungskanals für das Öl zu bilden. Durch die Schrägstellung der Führungsbleche wird zudem eine hydrodynamische Führung des Ölstroms begünstigt, bei welcher dieser schräg aufwärts strömt und gegen die Oberfläche des Ölbades gerichtet ist, was den Transport von Luftblasen an die Oberfläche des Ölbades und die anschließende Entgasung begünstigt.

Vorzugsweise kann innerhalb dieses mit wechselnden Querschnitten versehenen Strömungskanals die Anordnung schräg aus dem Ölbad führender Sammelflächen vorgesehen sein. Zunächst bilden diese Sammelflächen mit ihrer oberen Oberfläche eine Barriere für die an der Oberfläche des Ölbades treibenden Blasen, wie der vorerwähnte Ölschaum. An den unteren Oberflächen dieser Sammelflächen sammeln sich Luftblasen, ähnlich wie unter den Rückhalteplatten. Dabei bilden die Unterseiten dieser Sammelflächen strömungsberuhigte Bereiche, in denen die kleineren Luftbläschen nicht so leicht vom übrigen Ölstrom mitgerissen werden können. Die Sammelflächen bieten dabei den kleineren Bläschen die Möglichkeit, ortsfest zu verbleiben und sich an diesen Sammelflächen anzulagern, bis sie durch Kontakt mit weiteren Bläschen zu ausreichend großen Luftblasen koagulieren, welche Auftriebskräfte entwickeln, welche das ausreichend schnelle Aufsteigen zur Oberfläche des Ölbades und damit die Entgasung, also das Abscheiden der Luft aus dem Öl, ermöglichen.

Vorteilhaft kann unterhalb des Strömungskanals mit den wechselnden Querschnitten ein großvolumiger Sammelraum für das Öl vorgesehen sein, sodass hier ein großer Strömungsquerschnitt für das Öl vorliegt und die Strömungsgeschwindigkeit entsprechend langsam ist. So wird auch kleinsten Luftbläschen Gelegenheit gegeben, ausreichend schnell aufzusteigen, um nicht mit dem Ölstrom mitgenommen sondern ausgeschieden zu werden.

Vorschlagsgemäß kann eine Anlage mit kompakten Abmessungen geschaffen werden, wo innerhalb eines Gehäuses zunächst die Kolonne von Rückhalteplatten, anschließend der Strömungskanal mit wechselnden Querschnitten, und schließlich der Ölsammelraum vorgesehen sein kann. Die Seitenwandungen dieses gemeinsamen Behälters können beispielsweise die Seitenwandungen sämtlicher dieser drei Teilbereiche bilden, sodass eine kostengünstige Herstellung und eine Verringerung von potenziellen Leckagestellen verwirklicht werden kann.

Der Ölauslass kann bei dem vorgenannten Sammelraum dem Ende des vorherigen Strömungskanals mit den wechselnden Querschnitten möglichst gegenüberliegend angeordnet sein, sodass ein möglichst langer Strömungsweg des Öls innerhalb dieses Sammelraums erzwungen wird und so auch kleinere Luftbläschen ausreichend Zeit haben, um aufzusteigen, ohne von dem Ölstrom zum Ölauslass mitgeführt zu werden.

Um eine Bündelung des Ölstroms im Bereich des Ölauslasses zu vermeiden und stattdessen eine möglichst weiträumige Verteilung des Einzugsbereiches dieses Ölauslasses zu bewirken, kann vorteilhaft eine Glocke vorgesehen sein, welche die Ölauslassöffnung umgibt, sodass der Ölstrom zunächst diese Glocke umströmen muss, in die Glocke eintreten und dann durch den Ölauslass aus dem Luftblasen-Abscheider gelangen kann. Luftbläschen, die sich innerhalb der Glocke befinden und absetzen, können vorteilhaft unter einer oberen Schrägfläche der Glocke gesammelt werden, wobei die Schrägstellung dieser Fläche dazu führt, dass ausreichend große Luftblasen mit ausreichendem Auftrieb unter dieser Schrägfläche nach oben aufsteigen und zu einer Luftaustrittsöffnung geführt werden, sodass sie anschließend aufsteigen und aus dem gesamten Ölbad entgast werden können.

Bei einer kompakten Ausgestaltung des Luftblasen-Abscheiders, bei welcher das weiter oben genannte Sägezahnprofil oberhalb des Ölsammelraumes vorgesehen ist, können sich im Ölsammelraum Luftblasen unten an das sägezahnförmige Blech anlagern. Insbesondere bei den nach oben weisenden Spitzen dieses Sägezahnprofils können dann Luftsammelräume vorgesehen sein, aus denen die Luft vorteilhaft mittels dort vorgesehener Entgasungskamine austreten kann. Im Vergleich zu einfachen Durchtrittsöffnungen, welche diese Luftblasen in den Strömungskanalbereich mit wechselnden Querschnitten führen würde, bewirkt der Entgasungskamin, dass diese Luftblasen - ohne erneut in den Ölstrom zu gelangen - unmittelbar an die Oberfläche des Ölbades geführt werden oder sogar über diese Oberfläche hinaus, so dass zuverlässig ausgeschlossen werden kann, dass diese Luft, die im großvolumigen Ölsammelraum enthalten war, erneut in den Ölstrom gelangen und erneut in diesen Sammelraum mitgeführt werden kann.

Ein Ausführungsbeispiel der Erfindung wird anhand der rein schematischen Zeichnung nachfolgend näher erläutert.

Darin ist mit 1 allgemein ein Luftblasen-Abscheider bezeichnet, der insgesamt als Sammelbehälter für Öl ausgestaltet ist und einen Öleinlass 2 aufweist sowie einen Ölauslass 3. Oberhalb des Öleinlasses 2 wird ein kaminartiger, senkrechter Schacht als Einlassbereich geschaffen, der durch eine Trennwand 4 vom übrigen Innenraum des Luftblasen-Abscheiders 1 abgetrennt ist, sodass ein Kurzschluss zwischen Öleinlass 2 und Ölauslass 3 vermieden ist.

Bei dem rein beispielhaften Einsatz in einer Zentralschmieranlage gelangt das mit Luftblasen versehene Öl von den Schmierstellen durch den Öleinlass 2 in den Luftblasen-Abscheider 1. Aufgrund der Trennwand 4 verläuft der Ölstrom im Wesentlichen senkrecht nach oben. Dabei tritt das Öl durch eine Vielzahl übereinander angeordneter und jeweils liegender, jedoch etwas schräg angestellter Rückhalteplatten 5. Diese sind jeweils als Lochblech ausgestaltet, sodass der Ölstrom durch diese Rückhalteplatten 5 hindurch treten kann.

Eine Vielzahl der Luftblasen hingegen wird an der Unterseite der Rückhalteplatten 5 festgehalten und am Aufsteigen gehindert, sodass hier die Möglichkeit besteht, dass mit dem nachfolgenden Ölstrom in den Einlassbereich eingetragene Luftblasen sich mit den dort bereits vorhandenen Luftblasen, die unter den Rückhalteplatten 5 hängen, vereinigen und zu insgesamt größeren Luftblasen koagulieren, die aufgrund ihrer höheren Auftriebskraft und aufgrund der Schrägstellung der Rückhalteplatten 5 unterhalb dieser entlangwandern bis zu einer der Durchtrittsbohrungen.

Im Gegensatz zu der rein schematischen Darstellung kann insbesondere vorgesehen sein, dass die Bohrungen der einzelnen Rückhalteplatten 5 versetzt zueinander angeordnet sind, sodass nach oben aufsteigende Luftblasen zunächst unter der nächst höheren Rückhalteplatte 5 abgefangen und zurückgehalten werden und dort die Möglichkeit zur weiteren Koagulation besteht.

Oberhalb der obersten Rückhalteplatte 5 hat sich ein Großteil der Luft zu vergleichsweise großen Luftblasen vereinigt, die genügend Auftriebskraft aufweisen, um zur Oberfläche des Ölbades aufzusteigen und durch die weitere Bewegung des Ölstroms nicht wieder nach unten mitgenommen zu werden.

Die Trennwand 4 reicht nicht bis an die Oberfläche des Ölbades, sodass der Ölstrom aus den Rückhalteplatten 5 austritt und oberhalb der Trennwand 4 nach links fließt in einen Bereich, in welchem ein dort ausgebildeter Strömungskanal 6 unterschiedlich große freie Querschnittsflächen aufweist: diese werden durch ein unteres, sägezahnartig verlaufendes Blech 7 bestimmt, sodass sich zwischen diesem Blech 7 und der Ölbad-Oberfläche ein dementsprechend unterschiedlich großer Strömungskanal ergibt.

Eine weitere Verengung findet durch Sammelbleche 8 statt, die schräg zur Ölbad-Oberfläche sowie schräg zum sägezahnförmigen Blech 7 ausgerichtet sind. Die zwischen den Sammelblechen 8 und dem Blech 7 gebildeten Engstellen bilden düsenartige Querschnittsverengungen des Strömungskanals für das Öl und bewirken eine dort eine höhere Strömungsgeschwindigkeit, während sich hinter dem jeweiligen Sammelblech 8 der Kanalquerschnitt erweitert und eine Beruhigungszone mit vergleichsweise geringerer Strömungsgeschwindigkeit bildet. Durch diese geringe Geschwindigkeit haben Luftblasen eine verbesserte Möglichkeit aufzusteigen und an die Oberfläche des Ölbades zu gelangen.

Unterstützt wird dieses durch den schrägen Verlauf des Blechs 7 zur Oberfläche des Ölbades: der über das Blech 7 geführte Ölstrom schießt über das Blech hinaus an die Oberfläche des Ölbades, sodass Luftblasen zu ihrer eigenen "aktiven" Auftriebsbewegung auch durch die Richtung des Ölstroms "passiv" vom Ölstrom zur Ölbadoberfläche transportiert werden.

Anschließend an diese im wesentlichen horizontal nach links verlaufende, jedoch abschnittsweise immer schräg nach oben zur Ölbadoberfläche gerichtete Strömung des Öls wird das Öl durch die linke Seitenwand des Luftblasen-Abscheiders 1 nach unten umgelenkt, um in Richtung Ölauslass 3 zu gelangen.

Im Vergleich zu dem Strömungskanalquerschnitt oberhalb des sägezahnförmigen Bleches 7 ergibt sich unterhalb des Bleches 7 ein wesentlich größerer freier Strömungsquerschnitt für das Öl. Auch kleinste Luftbläschen, die nur geringe Auftriebskräfte und eine dementsprechend geringe Auftriebsgeschwindigkeit aufweisen, haben aufgrund der geringen Strömungsgeschwindigkeit des Öls hier die Möglichkeit, schneller aufzusteigen als sie vom Öl zum Ölauslass 3 transportiert werden, sodass auch in diesem Bereich noch eine Luftabscheidung erfolgt.

Diese kleinsten Bläschen sammeln sich unterhalb des Bleches 7, koagulieren gegebenenfalls mit anderen kleinsten Bläschen zu größeren Blasen, sodass diese nicht unterhalb des Bleches hängen bleiben, sondern jeweils zu den Spitzen dieses Bleches nach oben aufsteigen. Eine unzuträglich große Ansammlung von Luft unterhalb des Bleches 7 wird dadurch vermieden, dass im Bereich derartiger Spitzen Entgasungskamine 9 vorgesehen sind, die beispielsweise in Form von Röhrchen ausgestaltet sein können und vorzugsweise bis über die Oberfläche des Ölbades geführt sind, sodass ein Wiedereintritt der Luft, die sich unterhalb des Bleches 7 gesammelt hat, in das Ölbad ausgeschlossen ist.

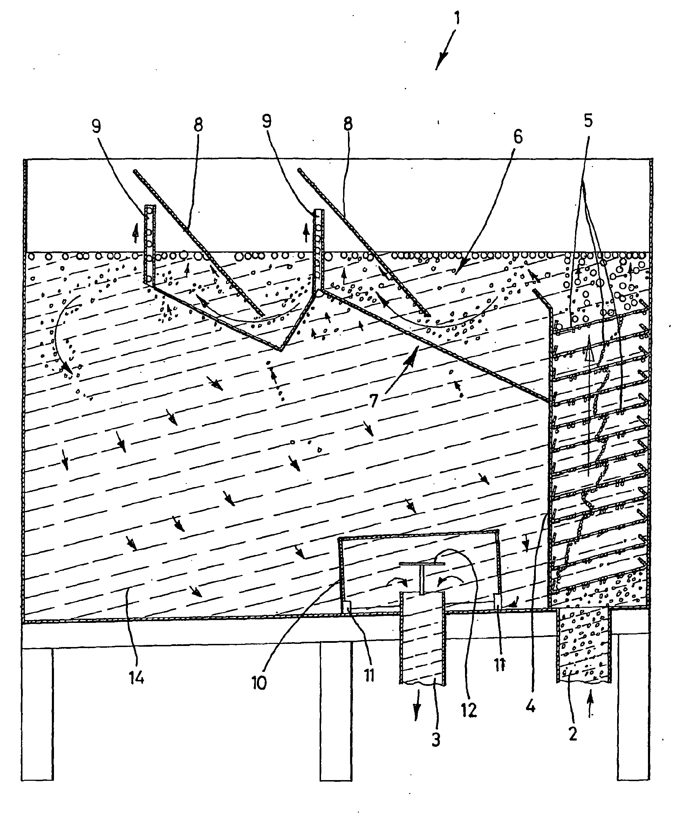

Oberhalb der Einströmöffnung des Ölauslasses 3 ist eine Glocke 10 angeordnet, die bei dem dargestellten Ausführungsbeispiel einfach aus einer schräg gestellten Haube besteht. Die Schrägstellung wird durch unterschiedlich hohe Abstandshalter 11 bewirkt und ergibt einen unterschiedlich breiten freien Eintrittsspalt für das Öl zwischen der Unterseite der Glocke 10 und der Bodenplatte des Abscheiders 1. Dieser Eintrittsspalt ist dort am größten, wo die Glocke 10 am weitesten von dem Ende des Bleches 7 entfernt ist, also in der Zeichnung rechts. Auf diese Weise wird vermieden, dass das Öl den kürzesten Weg zum Ölauslass 3 nimmt und ausschließlich an der Seite in die Glocke 10 einströmt, welche diesem Blech-Ende zugewandt ist, also in der Zeichnung links.

Durch die Schrägstellung wird weiterhin bewirkt, dass die Oberseite der Glocke 10 eine Schrägfläche bildet. Luftbläschen, die noch innerhalb der Glocke 10 aufsteigen, sammeln sich unter dieser Schrägfläche und, wenn sie koaguliert sind und entsprechende Auftriebskräfte aufweisen, wandern unter dieser Schrägfläche nach oben, wo eine aus Übersichtlichkeitsgründen nicht dargestellte Austrittsöffnung vorgesehen ist. Die dort aufsteigenden, ausreichend großen Luftblasen gelangen im Verhältnis zur langsamen Strömungsgeschwindigkeit des Öls zuverlässig unter das Blech 7 und werden durch einen Entgasungskamin 9 aus dem Öl ausgeschieden.

Ein schematisch vor der Eintrittsöffnung des Ölauslasses 3 angedeuteter Prallteller begünstigt eine möglichst gleichmäßige Zuströmung des Öls innerhalb der Glocke 10 in den Ölauslass.

Der dargestellte Luftblasen-Abscheider weist kompakte Abmessungen auf und kann in drei Abscheidezonen aufgeteilt werden: eine Grobabscheidung von Luftblasen erfolgt im Einlassbereich durch die Rückhalteplatten 5. Im unterschiedlich weiten Strömunkskanal erfolgt eine Feinabscheidung. Der Raum unterhalb des Bleches 7 ist als Sammelraum 14 für das Öl bezeichnet und ermöglicht aufgrund der dort geringen Strömungsgeschwindigkeit des Öls eine Feinstabscheidung von kleinsten Luftbläschen.

## Patentansprüche

1. Luftblasen-Abscheider (1) eines Ölkreislaufs,
mit einem Ölsammelbehälter, welcher ein Ausgasen des Öls durch ein oberhalb des Öls vorgesehenes Luftvolumen ermöglicht,
und mit einem Öleinlass (2) sowie einem Ölauslass (3),wobei in einem Einlassbereich, der in Strömungsrichtung hinter dem Öleinlass (2) vorgesehen ist, eine für den aufsteigenden Ölstrom durchlässige und das Öl zum Luftvolumen führende Kolonne vorgesehen ist,
welche aus in der nach oben gerichteten Strömungsrichtung hintereinander geschalteten, übereinander angeordneten Rückhalteplatten (5) besteht,
die einen Rückhalt von Luftblasen bewirkend jeweils gegenüber der Horizontalen schräg ausgerichtet sind,
und die aus Lochblechen bestehen **dadurch gekennzeichnet, dass** in Strömungsrichtung hinter den Rückhalteplatten (5) ein liegend angeordneter, Strömungskanal (6) mit abwechselnd unterschiedlich großen freien Querschnittsabmessungen vorgesehen ist,
indem der Querschnitt des Strömungskanals (6) durch einen sägezahnartig verlaufenden Boden begrenzt ist,
wobei der Strömungskanal (6) in seinem unteren Bereich das Öl führt und oberhalb dieses Ölbades einen Teil des Luftvolumens aufweist.

2. Luftblasen-Abscheider nach Anspruch 1,
**dadurch gekennzeichnet,**
**dass** die Löcher in den Rückhalteplatten (5) zueinander versetzt angeordnet sind, derart, dass ein Durchschießen der Luftblasen nach oben verhindert wird.

3. Luftblasen-Abscheider nach einem der vorhergehenden Ansprüche, **dadurch gekennzeichnet,**
**dass** im Strömungskanal (6) schräg zur Ölbad-Oberfläche sowie schräg zum sägezahnförmigen Boden des Strömungskanals (6) ausgerichtete, nach oben aus dem Ölbad führende Sammelflächen (8) für Luftblasen vorgesehen sind, die in Strömungsrichtung des Öls schräg aufwärts ausgerichtet sind.

4. Luftblasen-Abscheider nach einem der vorhergehenden Ansprüche, **dadurch gekennzeichnet,**
**dass** unterhalb des Strömungskanals (6) ein Sammelraum (14) für das Öl vorgesehen ist, welcher den Ölauslass (3) aufweist und dessen Volumen derart groß ist, dass er eine geringe Strömungsgeschwindigkeit des Öls bewirkt.

5. Luftblasen-Abscheider nach Anspruch 4,
**dadurch gekennzeichnet,**
**dass** der Ölauslass (3) etwa diametral gegenüberliegend von dem Ende des Strömungskanals (6) angeordnet ist.

6. Luftblasen-Abscheider nach einem der vorhergehenden Ansprüche, **dadurch gekennzeichnet,**
**dass** dem Ölauslass (3) eine Glocke (10) vorgeschaltet ist, welche die Ölauslassöffnung umgibt und Durchtrittsöffnungen für das Öl und / oder einen Abstand zur Wandung des Ölsammelbehälters aufweist.

7. Luftblasen-Abscheider nach Anspruch 6,
**dadurch gekennzeichnet,**
**dass** die Glocke (10) eine obere Schrägfläche aufweist, welche zu einer Luftaustrittsöffnung führt.

8. Luftblasen-Abscheider nach Anspruch 4,
**dadurch gekennzeichnet,**
**dass** vor den nach oben weisenden Spitzen des Sägezahnprofils Entgasungskamine (9) zur Oberfläche des Ölbads oder über dieses hinaus nach oben geführt sind.

## Claims

1. Deaeration apparatus (1) of an oil circuit, having an oil-collecting receptacle which enables degassing of oil by means of a body of air provided for above the oil,
and having an oil inlet (2) and an oil outlet (3), where a column which allows the rising oil to flow through it and conducts the oil to the body of air is provided for in an inlet portion downstream of the oil inlet (2) in the direction of flow, which column consists of retaining plates (5) placed in series and arranged one above the other in the upward direction of flow,
which retaining plates (5) are set at an angle to the horizontal and cause air bubbles to be retained,
and which retaining plates (5) consist of perforated metal plates, **characterised in that**
a horizontally disposed flow channel (6) with alternately differently sized free cross-sectional dimensions is provided for downstream of the retaining plates (5) in the direction of flow,
**in that** the cross-section of the flow channel (6) is limited by a sawtooth-shaped bottom portion, and the oil is held in the lower portion of the flow channel (6) and part of the body of air is held above this oil bath.

2. Deaeration apparatus in accordance with claim 1,
**characterised in that**
the holes in the retaining plates (5) are offset from one another so that the air bubbles are prevented from moving rapidly straight through them.

3. Deaeration apparatus in accordance with any of the foregoing claims,
**characterised in that**
air-bubble-collecting surfaces (8) inclined upwards in the direction of oil flow and running upwards out of the oil bath are disposed in the flow channel (6) at an angle to the surface of the oil bath and at an angle to the sawtooth-shaped bottom portion of the flow channel (6).

4. Deaeration apparatus in accordance with any of the foregoing claims,
**characterised in that**
an oil-collecting chamber (14) incorporating the oil outlet (3) and dimensioned so as to keep the oil flow rate low is provided for underneath the flow channel (6).

5. Deaeration apparatus in accordance with claim 4,
**characterised in that**
the oil outlet (3) is disposed approximately diametrically opposite the end of the flow channel (6).

6. Deaeration apparatus in accordance with any of the foregoing claims,
**characterised in that**
a cap (10) which surrounds the oil outlet hole and incorporates holes for the oil to flow through and/or is set at a distance from the wall of the oil-collecting receptacle is disposed upstream of the oil outlet (3).

7. Deaeration apparatus in accordance with claim 6,
**characterised in that**
the cap (10) incorporates an upper oblique surface which leads to an air outlet hole.

8. Deaeration apparatus in accordance with claim 4,
**characterised in that**
degasing funnels (9) leading upwards to or above the surface of the oil bath are disposed ahead of the apices of the sawtooth profile.

## Revendications

1. Dispositif de dégazage (1) d'un circuit d'huile, comprenant un carter collecteur d'huile permettant de dégazer l'huile par un volume d'air prévu au dessus de l'huile,
et avec un orifice d'admission (2) d'huile ainsi qu'un orifice de sortie (3) d'huile, sachant que dans une zone d'admission prévue, dans le sens de l'écoulement, en aval de l'orifice d'admission d'huile (2), une colonne perméable au flux d'huile montant et conduisant l'huile au volume d'air, laquelle colonne se compose de plaques de retenue (5) agencées - dans le sens d'écoulement vers le haut - les unes derrière les autres, les unes au dessus des autres,
et qui, provoquant une retenue des bulles d'air, présentent chacune une orientation oblique par rapport à l'horizontale,
et qui se composent de tôles ajourées,
**caractérisé en ce que** dans le sens de l'écoulement est prévu, en aval des plaques de retenue (5), un canal d'écoulement (6) agencé couché comportant des sections libres de tailles différentes,
la section du canal d'écoulement (6) étant limitée par un fond au tracé en dents de scie, la partie inférieure du canal d'écoulement (6) conduisant l'huile et présentant au dessus de ce bain d'huile une partie du volume d'huile.

2. Dispositif de dégazage selon la revendication 1,
**caractérisé en ce que**
les trous dans les plaques de retenue (5) sont agencés décalés les uns par rapport aux autres de sorte à empêcher que les bulles d'air jaillissent vers le haut.

3. Dispositif de dégazage selon l'une des revendications précédentes,
**caractérisé en ce que** dans le canal d'écoulement (6) des surfaces collectrices (8) des bulles d'air, obliques par rapport à la surface du bain d'huile ainsi qu'obliques par rapport au fond en dents de scie du canal d'écoulement (6), ont été prévues pour conduire les bulles vers le haut hors du bain d'huile et, observées dans le sens d'écoulement de l'huile, sont orientées inclinées vers le haut.

4. Dispositif de dégazage selon l'une des revendications précédentes,
**caractérisé en ce qu'** en dessous du canal d'écoulement (6) a été prévu un compartiment collecteur (14) de l'huile, lequel présente l'orifice de sortie (3) d'huile, et dont le volume a été dimensionné tel que la vitesse d'écoulement de l'huile est faible.

5. Dispositif de dégazage selon la revendication 4,
**caractérisé en ce que** l'orifice de sortie (3) d'huile se trouve environ diamétralement à l'opposé de l'extrémité du canal d'écoulement (6).

6. Dispositif de dégazage selon l'une des revendications précédentes,
**caractérisé en ce qu'**une cloche (10) a été installée en amont de l'orifice de sortie (3) d'huile, laquelle cloche englobe l'orifice de sortie d'huile et présente des orifices de passage pour l'huile et / ou un écart par rapport à la paroi du carter collecteur d'huile.

7. Dispositif de dégazage selon la revendication 6,
**caractérisé en ce que** la cloche (10) présente une surface supérieure oblique conduisant à un orifice de sortie d'air.

8. Dispositif de dégazage selon la revendication 4,
**caractérisé en ce que** devant les pointes regardant vers le haut du profilé en dent de scie, des cheminées de dégazage (9) sont guidées vers la surface du bain d'huile ou vers le haut au dessus de celui-ci.
